# FASCICULE DE BREVET EUROPEEN

(11) **EP 2 463 696 B1**
(45) Date de publication et mention de la délivrance du brevet: **18.09.2013**
(21) Numéro de dépôt: 11190441.3
(22) Date de dépôt: 24.11.2011
(51) Int. Cl.: G02B 6/44

(54) **Cassette de lovage de fibres et de maintien d'epissures**
Kassette zum Aufwickeln von Fasern und Aufrechterhalten der Spleißungen
Cassette for coiling fibres and maintaining splices

(30) Priorité: 07.12.2010 FR 1060167
(43) Date de publication de la demande: 13.06.2012
(73) Titulaire: Nexans, 75008 Paris (FR)
(72) Inventeur: Milanowski, Michel, 60540 Anserville (FR)
(74) Mandataire: Gauer, Pierre

(56) Documents cités:
- EP-A1- 0 823 650
- WO-A1-00/72073
- US-A1- 2002 191 939
- US-A1- 2005 123 261
- US-B1- 7 418 186

## Description

La présente invention a pour objet une cassette de lovage de fibres et de maintien d'épissures. Elle concerne également un boîtier muni d'une telle cassette, et notamment un boîtier permettant de raccorder des fibres optiques d'un utilisateur à des fibres optiques issues d'un câble d'acheminement de fibres optiques.

Les cassettes sont des boîtes de lovage et de protection de fibres optiques et souvent également de protection de raccords entre les fibres optiques lovées. De telles cassettes sont utilisées pour le raccordement d'un câble optique ou de différents câbles optiques à des jarretières optiques ou à d'autres câbles. Chaque cassette est affectée à deux fibres optiques à raccorder l'une à l'autre ou à plusieurs fibres à raccorder individuellement à plusieurs autres fibres.

Les cassettes sont disposées dans un boîtier de raccordement destiné à raccorder un câble principal à un ou plusieurs câbles d'utilisateurs.

Les fibres sont sorties du câble principal dans des ensembles de petits câbles appelés microtubes que l'on amène à la cassette pour réaliser la connexion avec des microtubes de l'utilisateur.

La cassette comprend à son entrée et à sa sortie un élément de maintien des microtubes, appelé peigne, et destiné à maintenir les microtubes lors du maniement de la cassette, de manière à éviter une atténuation du signal ou une rupture des fibres.

Un peigne de l'état de la technique, comme par exemple le peigne illustré à la figure 4 du document EP 1 870 750, comprend des rainures de maintien des microtubes disposées orthogonalement au plan de la cassette et recouvertes par un volet.

Ce type de peigne a pour inconvénient d'être volumineux.

On connaît également du document US 7 418 186 un peigne disposé à l'intérieur d'une cassette. Toutefois, quand un microtube est installé dans le peigne, on est obligé de démonter le peigne pour mettre un deuxième micrrotube.

La présente invention vise à remédier à ces inconvénients.

Elle propose en particulier un peigne compact permettant de s'affranchir de la présence d'un volet pour maintenir les rainures.

L'invention a ainsi pour objet une cassette de lovage de fibres et de maintien d'épissures, comprenant au moins un élément de maintien de fibres muni de rainures, appelé peigne, les rainures du peigne étant sensiblement parallèles au plan de la cassette.

Dans la cassette selon l'invention comme définie dans la revendication 1, chaque peigne est disposé sur la bordure latérale de la cassette et la bordure latérale comprend à proximité du peigne un évidement permettant le passage des fibres.

La présence de l'évidement permet de ne pas avoir à démonter le peigne lorsqu'on souhaite ajouter un microtube.

Les rainures sont délimitées par des plateaux sensiblement parallèles au plan de la cassette.

Les plateaux peuvent comprendre une ou plusieurs nervures aptes à renforcer le maintien des ensembles de fibres entre les plateaux.

Chaque peigne peut faire partie intégrante de la cassette.

Chaque peigne peut être disposé sur la bordure latérale de la cassette.

La cassette peut comprendre un unique peigne assurant le maintien des fibres en entrée et en sortie de cassette.

La cassette peut comprendre un peigne d'entrée et un peigne de sortie.

La cassette peut comprendre deux faces, chaque face étant munie d'une zone de lovage de fibres et d'une zone de maintien d'épissures, et les zones de maintien d'épissures peuvent être distinctes et non superposées dans l'épaisseur de la cassette.

Chaque zone de maintien d'épissure peut être disposée dans l'espace compris entre le plan de la bordure inférieure et le plan de la bordure supérieure de la cassette.

Chaque peigne peut comprendre une rainure disposée du côté de la première face et une rainure disposée du côté de la deuxième face.

D'autres caractéristiques et avantages de la présente invention apparaîtront plus clairement à la lecture de la description suivante donnée à titre d'exemple illustratif et non limitatif et faite en référence aux dessins annexés sur lesquels :
- les figures 1 et 2 illustrent la face avant d'une cassette selon l'invention, conformément à un premier mode de réalisation,
- les figures 3 à 5 illustrent différentes parties d'une cassette selon l'invention, conformément à un deuxième mode de réalisation.

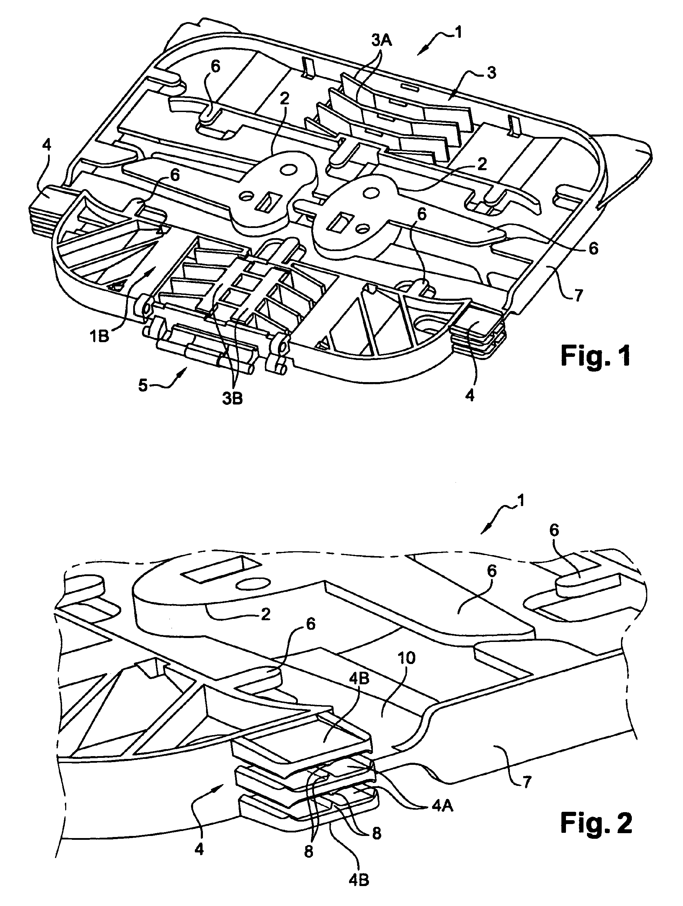

La cassette 1, telle qu'illustrée en perspective de dessus à la figure 1, est plane et comprend des moyens de lovage 2 des fibres disposés dans une zone centrale de lovage de fibres, ainsi que des moyens de maintien 3 d'épissures entre fibres disposés dans une zone supérieure de maintien d'épissures, au-dessus de la zone centrale de lovage de fibres.

La cassette 1 comprend en outre un ou plusieurs peignes 4 pour maintenir les microtubes de fibres optiques à l'entrée et à la sortie de la cassette 1, ainsi qu'une charnière 5 qui permet soit d'articuler la cassette 1 sur son châssis soit de fixer la cassette 1 sur une autre cassette en réalisant l'articulation de cette dernière.

Les moyens de lovage 2 permettent d'avoir une longueur suffisante de fibres pour les amener à une soudure. Ils permettent d'effectuer plusieurs interventions sur les fibres pour les réparer.

Les moyens de lovage 2 peuvent par exemple comprendre deux tambours à partie périphérique courbe ou partiellement courbe qui permettent de lover les fibres dans les espaces libres de la zone de lovage. L'utilisation de tambours garantit un rayon minimum à la fibre et l'utilisation des deux tambours 2 permet un guidage en forme de S des fibres de manière à ce que les fibres entrent et sortent du même côté de la cassette 1, à l'extérieur de la cassette 1.

La cassette 1 comprend des moyens de rétention 6 des fibres lovées, par exemple sous la forme de pattes plates 6, disposés dans la zone centrale de lovage de fibres. Les moyens de rétention 6 peuvent en particulier être disposés sur les moyens de lovage 2.

Les moyens de maintien 3 d'épissures comprennent des parois de maintien 3A verticales de fibres. Les parois de guidage 3A sont orthogonales au plan de la casette et reposent sur un support 3B horizontal de maintien d'épissures parallèle au plan de la cassette 1. Le support 3B représenté à la figure 1 est le support des parois de guidage de la face arrière de la cassette 1.

Ainsi, la face avant illustrée à la figure 1 comprend une zone centrale de lovage de fibres et une zone supérieure de maintien d'épissures située dans une cavité disposée dans l'épaisseur de la cassette 1, au-dessus de la zone centrale de lovage de fibres, la zone inférieure de maintien d'épissures étant la zone de maintien d'épissures de la face arrière.

Chaque zone de maintien d'épissures n'est accessible à un opérateur que sur une face de la cassette 1.

La cassette 1 comprend une bordure inférieure 1A et une bordure supérieure 1B. La bordure inférieure 1A et Ia bordure supérieure 1B sont horizontales, sensiblement planes, et délimitent l'épaisseur de la cassette 1. La cassette 1 comprend également une bordure latérale verticale 7.

Tout comme les moyens de lovage 2, les moyens de maintien 3 d'épissures sont disposés dans l'épaisseur de la cassette 1, entre la surface inférieure 1A et Ia surface supérieure 1B de la cassette 1.

Conformément à l'invention, les peignes 4 sont munis de rainures 4A sensiblement parallèles au plan de la cassette 1 (figure 2). Les rainures 4A permettent de maintenir les ensembles de fibres optiques dans un plan sensiblement parallèle au plan de la cassette 1. Les rainures 4A sont délimitées par des plateaux 4B sensiblement parallèles au plan de la cassette 1. Les peignes 4 sont fixés sur la bordure latérale 7 de la cassette 1.

Ainsi, les peignes 4 ne sont pas le facteur dimensionnant de l'épaisseur de la cassette 1, car ils ne comprennent pas de volet, le volet de l'état de la technique étant remplacé par l'arrivée des fibres dans le plan de la cassette 1 et par la bordure latérale 7 qui fait office de butée.

Chaque peigne 4 comprend avantageusement une rainure 4A disposée du côté de la face avant et une rainure 4A disposée du côté de la face arrière.

Les plateaux 4B comprennent avantageusement une ou plusieurs nervures 8 aptes à renforcer le maintien des microtubes entre les plateaux 4B.

La bordure latérale 7 comprend à proximité du peigne 4, et sur chaque face, un évidement 10 permettant le passage des microtubes. L'évidement 10 permet le passage des microtubes depuis le peigne 4, placé du côté extérieur de la cassette 1, vers l'intérieur de la cassette 1. On peut ainsi insérer tous les microtubes dans le peigne 4 sans qu'il soit nécessaire de démonter le peigne 4. La bordure latérale 7 située à côté de l'évidement 10 fait office de butée et permet de retenir les microtubes et de les empêcher de sortir latéralement de la cassette 1.

Dans le mode de réalisation illustré aux figures 1 et 2, les peignes 4 font partie intégrante de la cassette 1.

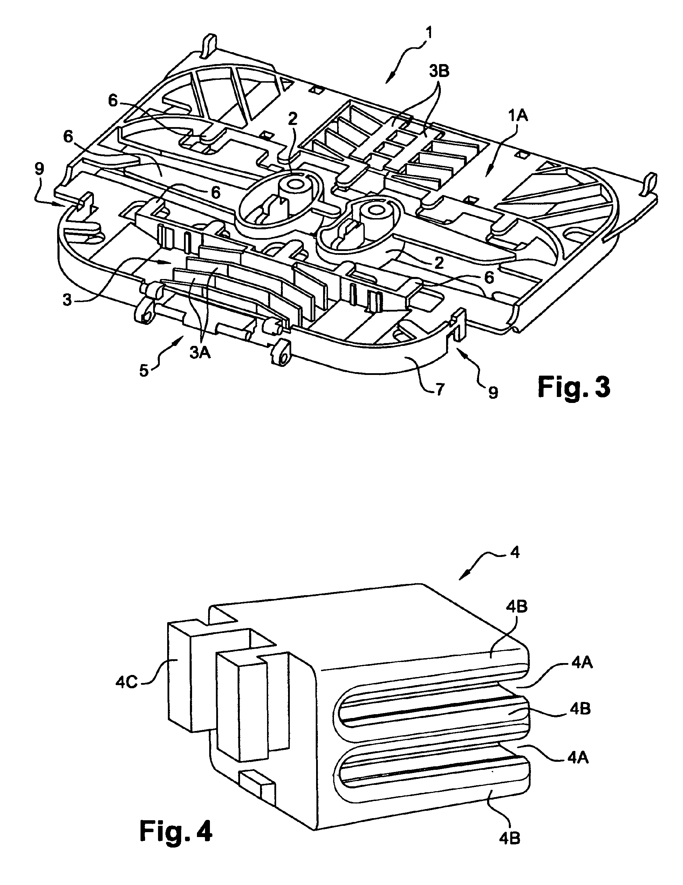

Dans un deuxième mode de réalisation, illustré aux figures 3 à 5, les peignes 4 sont des pièces amovible de la cassette 1.

La figure 3, sur laquelle les éléments identiques à ceux des figures 1 et 2 portent les mêmes références, illustre la face arrière de la cassette 1. La face arrière comprend une zone centrale de lovage de fibres et une zone inférieure de maintien d'épissures située dans une cavité disposée dans l'épaisseur de la cassette 1, en dessous de la zone centrale de lovage de fibres, la zone supérieure de maintien d'épissures étant la zone de maintien d'épissures de la face avant.

Les deux zones de lovage de la face avant et de la face arrière sont superposées, ce qui permet un gain de place. Le support horizontal 3B de maintien d'épissures de la face arrière s'étend au niveau de la surface supérieure 1B de la face avant et le support horizontal 3B de maintien d'épissures de la face avant s'étend au niveau de la surface supérieure 1A de la face arrière.

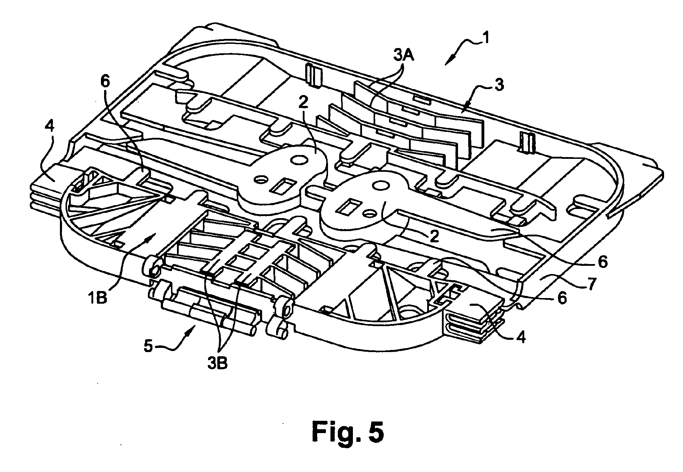

La partie de la bordure 7 située du côté de la zone de maintien d'épissures se prolonge à chacune de ses extrémités par une zone de réception 9 apte à recevoir un peigne amovible 4. Un tel peigne 4 est illustré à la figure 4. Il comprend une zone de fixation 4C lui permettant de s'emboîter dans la zone de réception 9 de la cassette 1. La figure 5 illustre la cassette 1 munie des deux peignes amovibles 4.

## Revendications

1. Cassette (1) de lovage de fibres et de maintien d'épissures, comprenant au moins un élément de maintien (4) de fibres muni de rainures (4A), appelé peigne (4), les rainures (4A) du peigne (4) étant sensiblement parallèles au plan de la cassette (1), les rainures (4A) étant délimitées par des plateaux (4B) sensiblement parallèles au plan de la cassette (1), **caractérisée en ce que** chaque peigne (4) est disposé sur la bordure latérale (7) de la cassette (1), sur le côté de la bordure latérale (7) qui est extérieur à la cassette (1), chaque peigne (4) étant placé du côté extérieur de la cassette (1), et **en ce que** la bordure latérale (7) comprend à proximité du peigne (4) un évidement (10) permettant le passage des fibres.

2. Cassette (1) selon la revendication 1, **caractérisée en ce que** les plateaux (4B) comprennent une ou plusieurs nervures (8) aptes à renforcer le maintien des ensembles de fibres entre les plateaux (4B).

3. Cassette (1) selon la revendication 1 ou 2, **caractérisée en ce que** chaque peigne (4) fait partie intégrante de la cassette (1).

4. Cassette (1) selon l'une des revendications 1 à 3, **caractérisé en ce que** chaque peigne (4) est une pièce amovible de la cassette (1).

5. Cassette (1) selon l'une des revendications 1 à 5, **caractérisée en ce qu'**elle comprend un unique peigne (4) assurant le maintien des fibres en entrée et en sortie de cassette (1).

6. Cassette (1) selon l'une des revendications 1 à 5, **caractérisée en ce qu'**elle comprend un peigne d'entrée (4) et un peigne de sortie (4).

7. Cassette (1) selon l'une des revendications 1 à 7, **caractérisée en ce qu'**elle comprend deux faces, chaque face étant munie d'une zone de lovage de fibres et d'une zone de maintien d'épissures, et **en ce que** les zones de maintien d'épissures sont distinctes et non superposées dans l'épaisseur de la cassette (1).

8. Cassette (1) selon la revendication 7, **caractérisée en ce que** chaque zone de maintien d'épissure est disposée dans l'espace compris entre le plan de la bordure inférieure (1A) et le plan de la bordure supérieure (1B) de la cassette (1).

9. Cassette (1) selon la revendication 7 ou 8, **caractérisée en ce que** chaque peigne (4) comprend une rainure (4A) disposée du côté de la première face et une rainure (4A) disposée du côté de la deuxième face.

## Patentansprüche

1. Kassette (1) zum Aufwickeln von Fasern und Aufrechterhalten der Spleißungen, die mindestens ein mit Rillen (4A) ausgestattetes Faser-Halteelement (4), Kamm (4) genannt, aufweist, wobei die Rillen (4A) des Kamms (4) etwa parallel zur Ebene der Kassette (1) sind, wobei die Rillen (4A) von zur Ebene der Kassette (1) etwa parallelen Platten (4B) begrenzt sind, **dadurch gekennzeichnet, dass** jeder Kamm (4) auf dem seitlichen Rand (7) der Kassette (1) auf der Seite des seitlichen Rands (7) außerhalb der Kassette (1) angeordnet ist, wobei jeder Kamm (4) auf der Außenseite der Kassette (1) angeordnet ist, und dass der seitliche Rand (7) in der Nähe des Kamms (4) eine Aussparung (10) umfasst, die den Durchgang der Fasern erlaubt.

2. Kassette (1) nach Anspruch 1, **dadurch gekennzeichnet, dass** die Platten (4B) eine oder mehrere Rippen (8) umfassen, die imstande sind, den Halt der Fasergruppen zwischen den Platten (4B) zu verstärken.

3. Kassette (1) nach Anspruch 1 oder 2, **dadurch gekennzeichnet, dass** jeder Kamm (4) fester Bestandteil der Kassette (1) ist.

4. Kassette (1) nach einem der Ansprüche 1 bis 3, **dadurch gekennzeichnet, dass** jeder Kamm (4) ein von der Kassette (1) lösbares Teil ist.

5. Kassette (1) nach einem der Ansprüche 1 bis 5, **dadurch gekennzeichnet, dass** sie einen einzigen Kamm (4) umfasst, der den Halt der Fasern am Eingang und Ausgang der Kassette (1) sicherstellt.

6. Kassette (1) nach einem der Ansprüche 1 bis 5, **dadurch gekennzeichnet, dass** sie einen Eingangskamm (4) und einen Ausgangskamm (4) umfasst.

7. Kassette (1) nach einem der Ansprüche 1 bis 7, **dadurch gekennzeichnet, dass** sie zwei Flächen umfasst, wobei jede Fläche mit einer Zone zum Aufwickeln der Fasern und einer Zone zum Aufrechterhalten der Spleißungen ausgestattet ist, und dass die Zonen zum Aufrechterhalten der Spleißungen unterschiedlich und in der Dicke der Kassette (1) nicht übereinanderliegen.

8. Kassette (1) nach Anspruch 7, **dadurch gekennzeichnet, dass** jede Zone zum Aufrechterhalten der Spleißungen in dem Raum angeordnet ist, der zwischen der Ebene des unteren Rands (1A) und der Ebene des oberen Rands (1B) der Kassette (1) inbegriffen ist.

9. Kassette (1) nach Anspruch 7 oder 8, **dadurch gekennzeichnet, dass** jeder Kamm (4) eine Rille (4A) umfasst, die auf der Seite der ersten Fläche angeordnet ist, und eine Rille, (4A), die auf der Seite der zweiten Fläche angeordnet ist.

## Claims

1. A cassette (1) for coiling fibers and maintaining splices, comprising at least one fiber maintaining element (4) provided with slots (4A), called a comb (4), the slots (4A) of the comb (4) being substantially parallel to the plane of the cassette (1), the slots (4A) being delimited by plates (4B) that are substantially parallel to the plane of the cassette (1), **characterized in that** each comb (4) is positioned on the side edge (7) of the cassette (1), on the side of the side edge (7) that is outside the cassette (1), each comb (4) being placed on the outer side of the cassette (1), and **in that** the side edge (7) comprises, near the comb (4), a recess (10) allowing the passage of fibers.

2. The cassette (1) according to claim 1, **characterized in that** the plates (4B) comprise one or more ribs (8) capable of reinforcing the maintenance of the set of fibers between the plates (4B).

3. The cassette (1) according to claim 1 or 2, **characterized in that** each comb (4) is an integral part of the cassette (1).

4. The cassette (1) according to one of claims 1 to 3, **characterized in that** each comb (4) is a removable part of the cassette (1).

5. The cassette (1) according to one of claims 1 to 5, **characterized in that** it comprises a single comb (4) ensuring maintenance of the fibers at the inlet and outlet of the cassette (1).

6. The cassette (1) according to one of claims 1 to 5, **characterized in that** it comprises an inlet comb (4) and an outlet comb (4).

7. The cassette (1) according to one of claims 1 to 7, **characterized in that** it comprises two faces, each face being provided with a fiber coiling area and a splice maintaining area, and **in that** said splice maintaining areas are distinct from and not superimposed in the thickness of the cassette (1).

8. The cassette (1) according to claim 7, **characterized in that** each splice maintaining area is positioned in the space comprised between the plane of the lower edge (1A) and the plane of the upper edge (1B) of the cassette (1).

9. The cassette (1) according to claim 7 or 8, **characterized in that** each comb (4) comprises a slot (4A) positioned on the side of the first face and a slot (4A) positioned on the side of the second face.
